# EUROPEAN PATENT SPECIFICATION

(11) **EP 4 043 293 B1**
(45) Date of publication and mention of the grant of the patent: **03.12.2025**
(21) Application number: 22155851.3
(22) Date of filing: 09.02.2022
(51) Int. Cl.: B60R 21/06, B60P 7/08

(54) **BARRIER NET**
SPERRNETZ
FILET BARRIÈRE

(30) Priority: 10.02.2021 SE 2150145
(43) Date of publication of application: 17.08.2022
(73) Proprietor: Klippan Safety AB, 264 21 Klippan (SE)
(72) Inventor: KARLSSON, Alexander, Helsingborg (SE)
(74) Representative: Ström & Gulliksson AB

(56) References cited:
- EP-A1- 3 831 670
- WO-A2-03/041998
- DE-A1- 10 358 425
- DE-A1- 102005 011 453
- JP-A- H08 258 615

## Description

### TECHNICAL FIELD

The present invention relates to a barrier net for a vehicle and more precisely to a barrier net for separating a cargo area of a vehicle from a passenger compartment of the vehicle.

### BACKGROUND

When transporting goods or cargo in a vehicle, there is a risk that the goods will move about the interior of the vehicle as the vehicle accelerates, turns and/or de-accelerates. This may be particular problematic in e.g. stations wagons where a cargo area of the vehicle is open with regards to a passenger compartment of the vehicle. Should the cargo start moving in the forward direction of the vehicle when the vehicle de-accelerates, i.e. brakes, the cargo may hit one of the people of the vehicle or damage the interior or windshield of the vehicle.

Typically, the passenger compartment may be protected from the cargo area of the vehicle by a barrier net. In fact, the use of barrier net is so common that some countries have legislations making it illegal to sell cars under certain circumstances without a barrier net. These barrier nets must be cost effective and durable in order to meet requirements and protect passengers and the driver of a vehicle from moving cargo.

The most common use of a barrier net is to arrange it between the back of the rear passenger seat and the cargo area. However, in the case of e.g. station wagons, it is common to allow the rear passenger seats to be folded in order to effectively increase the cargo area. In this case, a barrier net has to be arranged just behind the front seats of the vehicle rather than behind the rear seats of the vehicle.

One problem with the requirement of dual arrangement positions of barrier nets in vehicles, is that it is not uncommon for vehicles to have different widths at the back of the front seats and the back of the rear seats. As a result, the barrier net, extending across the width of the car, will have some slack, typically at its top end, at one of these positions. If this slack becomes too big, there is a risk that cargo may move between the top end of the barrier net and the ceiling of the car, removing the purpose of the barrier net. Further to this, the slack mount of the barrier net is visually unappealing and simply looks bad. Historically, this has been solved by providing different barrier nets for arranging just behind the front seats and for arranging just behind the rear seats. There are some proposed solutions for using a single barrier net that is possible to fit snuggly at both positions of the vehicle.

One such solutions is disclosed in EP 1 192 063 A2 wherein a mechanism is provided for removably attaching both a netting member top to the cargo area and the netting member bottom to the cargo area. The barrier net further comprises a mechanism for rendering the netting member taut. An example of a barrier net corresponding to the preamble of claim 1 is disclosed in DE 10 2005 011 453 A1.

However, the solutions of the prior art are complex, difficult to manufacture and costly. From this, it is apparent that there is ample room for improvements.

### SUMMARY

An object of the present invention is to provide a new type of barrier net which is improved over prior art and which eliminates or at least mitigates the drawbacks discussed above. More specifically, an object of the invention is to provide a barrier net with a connection arrangement that is suitable for snug mounting at more than one position in a vehicle, and to accommodate different widths of the interior of the vehicle. These objects are achieved by the technique set forth in the appended independent claim 1 with preferred embodiments defined in the dependent claims related thereto.

According to the invention, a barrier net for separating a cargo area of a vehicle from a passenger compartment of the vehicle by being fastened to upper fastening elements of the vehicle is presented. The barrier net comprises hook elements arranged at each upper corner of the barrier net for fastening the barrier net to the upper fastening elements of the vehicle. At least one of the hook elements is connected to an upper edge element of the barrier net by means a connecting arrangement comprising a load bearing portion and a resilient portion. The load bearing portion and the resilient portion of the connecting arrangement are looped about a connection portion of the hook element wherein the resilient portion is shorter than the load bearing portion and thereby limits the resilience of the resilient portion.

According to the invention, both the load bearing portion and the resilient portion are extending from the upper edge element to the connection portion and back to the upper edge element. This beneficial as the loops formed by the load bearing portion and the resilient portion will effectively connect the upper edge element to the hook element. The load bearing portion will protect the resilient portion. The ends of the loops may be connected at one single point to the upper edge element simplifying production and reducing cost.

In one variant of the barrier net, the connection portion of the hook element is a closed loop. A closed loop is strong and less likely to deform when subjected to forces compared to a corresponding construction with a gap.

In one variant of the barrier net, the connecting arrangement is fully accommodated inside the upper edge element of the barrier net. Apart from being esthetically pleasing, this allows a net member of the barrier net to better cover the width of the vehicle.

In one variant of the barrier net, the resilient portion is attached to the upper edge element by a connection means. This is beneficial since the connection means may be specifically configured to efficiently and cost-effectively attach the resilient element to the upper edge element.

In one variant of the barrier net, the resilient portion and the load bearing portion of the connecting arrangement are attached to the upper edge element by the same connection means. This is beneficial since the connection means may be specifically configured to efficiently and cost-effectively attach the resilient element and the load bearing element to the upper edge element. Further to this, it reduces the cost of production as only one connection means is needed to attach both the resilient portion and the load bearing portion to the upper edge element.

In one variant of the barrier net, the connection means is attaching the connecting arrangement at an upper section of the upper edge element. This is beneficial since it allows the upper edge element to follow a substantially straight line of the inner ceiling of the vehicle, reducing any gaps between the inner ceiling and the barrier net.

In one variant of the barrier net, the connection means is attaching the connecting arrangement at a middle or lower section of the upper edge element. This is beneficial since it allows the upper edge element to follow an arched curvature of the inner ceiling of the vehicle, reducing any gaps between the inner ceiling and the barrier net.

In one variant of the barrier net, the resilient portion and the load bearing portion of the connecting arrangement are attached to the upper edge element by means of one or more connection arrangements in the form of seams. Seams are beneficial since they are cost-effective, formable and sturdy.

In one variant of the barrier net, at least one of said one or more seams is an envelope seam. Envelope seams are particularly sturdy and strong.

In one variant of the barrier net, the load bearing portion of the connecting arrangement is of a belt material. Belt materials are beneficial as they are flexible, cost effective and very strong.

In one variant of the barrier net, it comprises two hook elements wherein each of the hook elements is connected to the upper edge element by means of connecting arrangements. This is beneficial since the resilience of the barrier net provided by the connection arrangement can be divided between two connection arrangements reducing the required resilience of each of the connection arrangements.

In one variant of the barrier net, it comprises two hook element wherein one of the hook elements is connected to the upper edge element by means of the connecting arrangement and the other of the hook elements is connected to the upper edge element by a separate means not comprising a resilient portion. This is beneficial since the number of resilient elements is reduced and the overall cost of the barrier net is reduced.

In one variant of the barrier net, the upper edge element is formed from a flexible belt material. Belt materials are beneficial as they are flexible, cost effective and very strong.

### BRIEF DESCRIPTION OF THE DRAWINGS

Embodiments of the invention will be described in the following; references being made to the appended diagrammatical drawings which illustrate non-limiting examples of how the inventive concept can be reduced into practice.
Figs. 1a-b are schematic views of a vehicle with a mounted barrier net.
Fig. 2 is a schematic view of a barrier net.
Fig. 3 is a schematic view of a connection arrangement of a barrier net according to embodiments of the invention.
Fig. 4 is a schematic view of a connection arrangement of a barrier net according to embodiments of the invention.
Fig. 5 is a schematic view of a connection arrangement of a barrier net according to embodiments of the invention.
Figs. 6a-b are schematic views of an upper edge element of a barrier net according to embodiments of the invention.

### DETAILED DESCRIPTION OF EMBODIMENTS

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

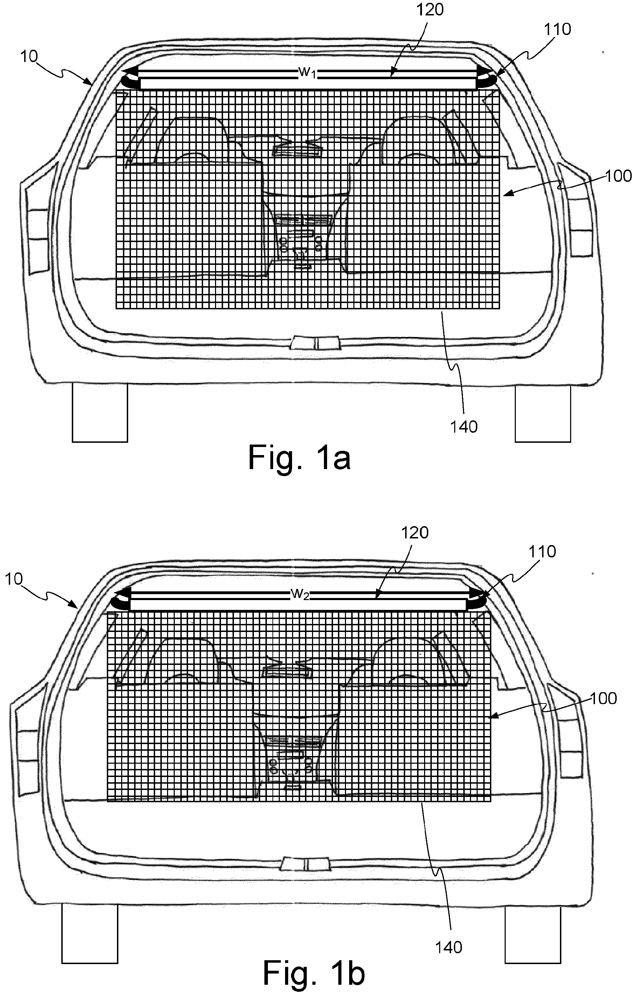

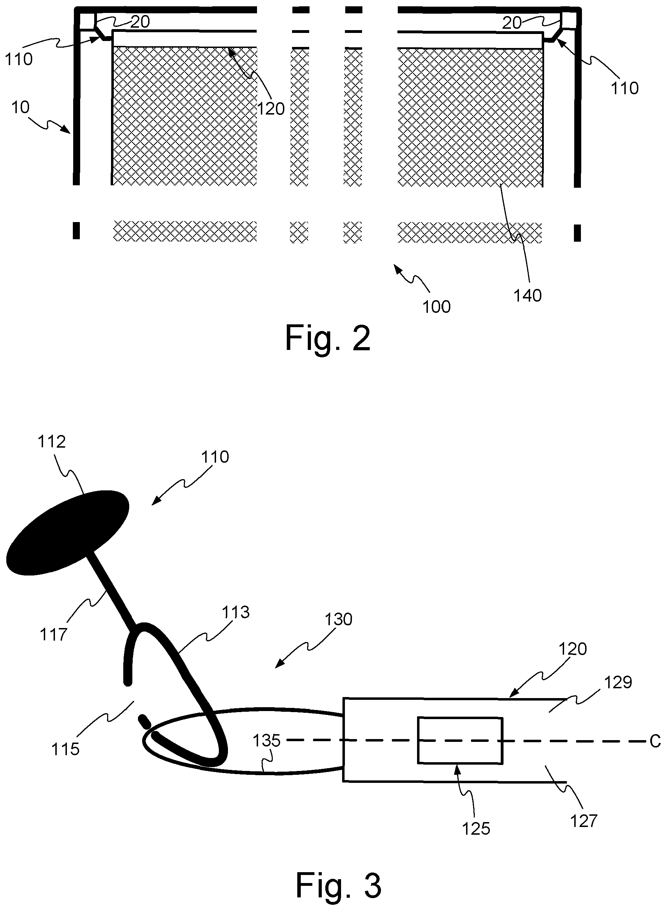

Fig. 1a shows a schematic view of a barrier net 100 mounted in a first position of a vehicle 10. Fig. 1b shows a view corresponding to that of Fig. 1a, but here, the barrier net 110 is mounted in a second position. The barrier net 100 comprises hook elements 110 at each upper corner of the barrier net 100. The hook elements 110 are for attaching the barrier net 100 to an upper section of the vehicle 10, typically to the inner ceiling of the vehicle 10, an upper section of the inner walls of the vehicle, or a section of the vehicle where the inner walls meet the ceiling. The hook elements 110 are connected to an upper edge element 120 of the barrier net 100. It is in this connection to the upper edge element 120 the inventive concept lies. Due to different interior widths of the vehicle 10, e.g. at the first respective second position of the barrier net in the vehicle 10, the width of the barrier net 100, i.e. the distance between corresponding positons of the hook elements 110, is different. In the first positon of Fig. 1a, the hook elements 110 are at a first distance w₁ and in the second position of Fig. 2a, the hook elements 110 are at a second distance w₂. The present invention allows the barrier net 100 to be mounted at different distances between the hook elements 110 without introducing slack of the upper edge element 120. This is accomplished by ensuring that the upper edge element 120 is stretched, i.e. taut, tensed etc., at each of its intended mounting positions. The description given with reference to Figs. 1a-b is exemplary only and as will be readily understood by the skilled person after digesting the teachings hearing, there may be many more than two different positions for the barrier net 100 and many more than two different widths.

Typically, the upper edge element 120 of the barrier net 100 is a flexible element. That is flexible in the sense of foldable, typically not elastic. In one embodiment, the upper edge element 120 comprises a belt material. In order to withstand forces subjected to the barrier net 100, the upper edge element 120 is typically substantially un-stretchable in at least its direction of extension. A flexible upper edge element 120 will allow the barrier net 100 to be folded when it is not used in order to facilitate easier and more convenient storage. Further to this, the packaging of the barrier net 100 may be reduced and from this the environmental impact, cost and hassle of logistics can be reduced.

The inventive concept of the barrier net 100 of the present invention relates to its attachment to the upper section of the vehicle 10. Typically, a barrier net is attached also at a lower section of the vehicle 10 but, as the skilled person understands, the lower attachment can be any suitable attachment known in the art. There may be barrier nets 100 configured with weights at the lower end or barrier net being rigid in a vertical direction making attachments at the lower section of the vehicle 10 superfluous. The skilled person will know if and how to combine the invention with suitable fastening means for attachment to the lower section of the vehicle 10. Consequently, any lower fastening is not required for the enablement of the present invention and will not be discussed further. The same reasoning applies to a net member 140 of the barrier net 100. All barrier nets 100 will typically comprise a net member 140 arranged to extend substantially the inner width and inner height of the vehicle 10 suspended by the upper edge element 120. Consequently, also the net member 140 is known to the skilled person, the net member 140 can be any suitable net member 140 known in the art and the details of the net member 140 are not required for the enablement of the present invention and will not be discussed further.

Turning now to Fig. 2, a schematic view of a barrier net 100 according to embodiments of the invention is shown. The hook elements 110 are fastened to upper fastening elements 20 of the vehicle 10. The upper fastening elements 20 are typically arranged in pairs in the interior of the vehicle 10, one at each side of the vehicle 10. The upper fastening elements 20 may be any suitable upper fastening element 20 and it is quite common that the upper fastening element 20 differ between manufacturers and models of vehicles 10. The inventive concept of the present invention is not dependent on the type of upper fastening element 20, only that the hook elements 110 can be fastened to, and removed from the upper fastening elements 20. One example of an upper fastening element 20 is in the form of a cavity covered by keyhole structured plate. The hook element 110 would typically comprise a plate-like structure forming a head portion 112 (see Fig. 3), that fits in the larger opening of the keyhole structured plate. The hook element may be formed such that the plate like head portion 112 is fastened to a rod portion 117 (see Fig. 3), having a form that fits in the smaller, typically elongated, opening of the keyhole structured plate.

The hook element 110 of the barrier net 100 is, at least at one of its upper corners, connected to the upper edge element 120 by means a connecting arrangement 130 of which one embodiment is shown in Fig. 3. The connection arrangement 130 engages a connection portion 113 of the hook element 110 at one end, and is fastened to the upper edge element 120 in the other end, effectively attaching the hook element 110 to the upper edge element 120. The connecting arrangement 130 preferably comprises a resilient portion 135. This resilient portion 135 is resilient at least in the extension of the upper edge element 120 such that the barrier net 100 can be stretched to fit different distances between pairs of upper fastening elements 20 even if the upper edge element 120 is substantially un-stretchable in its direction of extension. The resilient portion 135 may be any form of suitable elastic or resilient material that, in this embodiment, is capable of withstanding forces subjected to the connecting arrangement 130 when the barrier net 100 is stopping goods from entering the passenger compartment of the vehicle 10 in the event of e.g. a heavy de-acceleration of the vehicle 10. The connecting portion 113 of the hook element 110 may be formed with an open section 115 such that the connection arrangement 130 and the resilient portion 135 can easily be hooked into engagement with the hook element 110. The resilient portion 135 may be provided with an opening (not shown) in the form of e.g. an eyelet, with which the connecting portion 113 can be engaged. In order to increase the strength of the resilient portion 135, it is preferably attached to the upper edge element 120, as shown in Fig. 3, at both ends of the resilient portion 135. This means that the resilient portion 135 forms a loop that can engage the connecting portion 113 of the hook element 110. This arrangement allows for a quick, cost-effective and convenient assembly of the connecting arrangement 130 and the barrier net 100.

The connecting arrangement 130 is attached to the upper edge element 120 by connection means 125, typically adapted for the upper edge element 120. As previously mentioned, the upper edge element 120 is preferably formed from a material that is flexible in the sense that it is foldable. Such a material may be a belt material or a chain-type construction and the fastening of the connecting arrangement 130 to the upper edge element 120 will differ depending on how the upper edge element 120 is formed. If the upper edge element 120 is a chain (embodiment not shown), the connecting arrangement 130 may be formed as a closed loop comprising the resilient portion 135. The resilient portion 135 may at one side be threaded through one of the links of the chain of the upper edge element 120 and at the other end engaging the hook element 110. The closed loop of the resilient portion may be formed by joining the ends of the resilient portion 135 by means of seams.

In one embodiment, the upper edge element 120 is formed from a foldable belt material. In this embodiment, the connection means 125 may be e.g. rivets, nut and bolt assemblies and/or one or more seams. In a preferred embodiment, the connection means 125 is/are one or more seams arranged to attach the connecting arrangement 130 to the upper edge element 125. The one or more seams 125 may, as will be explained in coming sections, be arranged at a central section of the upper edge element 120, at a lower section 127 of the upper edge element 120, or at an upper section 129 of the upper edge element 120. The upper section 129 is defined as substantially above a center line C of the upper edge element 120 and the lower section 127 is defined as substantially below the center line C of the upper edge element 120. The one or more seams 125 may be any form of suitable seams 125. In embodiments of the invention, at least one of the one or more seams 125 is an envelope seam comprising two parallel seams in the direction of the extension of the upper edge element, and by at least one, preferably two, angled seams extending at least partially between the two parallel seams, and preferably connecting the two parallel seams.

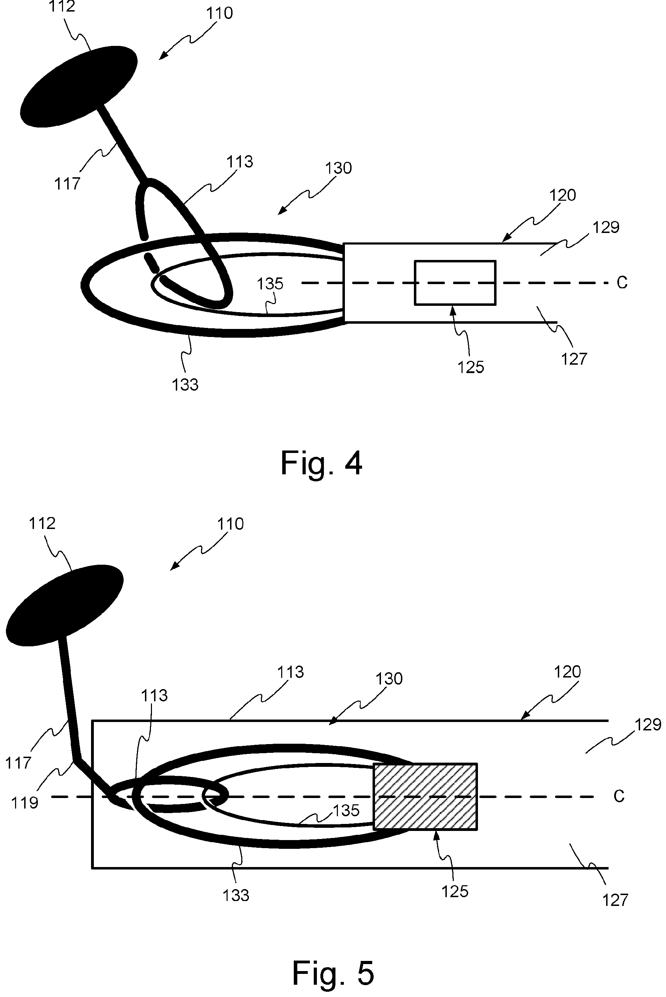

With reference to Fig. 4, in order to increase the durability of the barrier net 100 and the ability of the connecting arrangement 130 to withstand external forces, the connecting arrangement is, in one embodiment, provided with a load bearing portion 133. The load bearing portion 133 is arranged to prevent the resilient portion 135 from stretching too far and eventually break, in that the load bearing portion 133 will limit the resilience of the resilient portion 135. In other words, a maximum extension of the resilient portion 135 is defined by the load bearing portion 133. Generally, this implies that the load bearing portion 133 has a longer longitudinal extension than the resilient portion 135, i.e. the load bearing portion 133 is shorter than the resilient portion. The connecting portion 113 of the hook element 110 will, in this embodiment, engage both the resilient portion 135 and the load bearing portion 133, at least when the resilient portion 135 is extended to its maximum extension as defined by the load bearing portion 133. The load bearing portion 133 may be formed of any suitable material e.g. belt material, metal chain, wire etc. The load bearing portion 133 may be flexible or rigid but is configured to be more durable than the resilient portion 135 when it comes to longitudinal forces. That is to say, the load bearing portion 133 is, as the name implies, configured to bear the load of the barrier net 100 and is consequently stronger than the resilient portion 135. The load bearing portion 133 is preferably connected to the connecting portion 113 in the same or similar manner as the resilient portion 135 but this is not required for the invention. To exemplify, none of, one of, or both of the load bearing portion 133 and the resilient portion 135 may be looped about the connecting portion 113 combined with none of, the other one of, or both of the load bearing portion 133 and the resilient portion 135 being attached to the connecting portion 113 by means of e.g. eyelets. The same reasoning applies to the connection means 125 fastening of the resilient portion 135 and the load bearing portion 133 to the upper edge element 120. This means that the connection means may be one of or combinations of e.g. rivets, nut and bolt assemblies and/or one or more seams. In a preferred embodiment, the connection means 125 is/are one or more seams arranged to attach the resilient portion 135 and the load bearing portion 133 to the upper edge element 120, most preferably, it is the same one or more seams 125 that is/are arranged to attach the resilient portion 135 and the load bearing portion 133 to the upper edge element 120. That is, the load bearing portion 133, the resilient portion 135, and the upper edge element 125 are, at a region, stacked and connected by the same seam or seams forming the connection means 125.

As mentioned, the load bearing portion 133 and the resilient portion 135 may be looped about the connecting portion 113. This efficiently connects the upper edge element 120 to the hook element 110. The loop allows for a cost effective and simple connection without a need for additional features and/or steps when producing the barrier net 100. In addition to this, as the resilient portion 135 is preferably shorter than the load bearing portion 133, the load bearing portion 133 will form an outer loop, covering the inner loop formed by the resilient portion 135. This will allow the load bearing portion 133 to effectively protect the, generally weaker, resilient portion 135 from damage. The load bearing portion 133 will protect the resilient portion from cuts, tears, UV-light etc. In addition to this, the load bearing portion 133 covering the resilient portion will provide a more visibly pleasing product. In addition to this, if the loops are formed by one end of the load bearing member 133 and/or resilient member 135 start at the upper edge element 120, and the other end attaches to the load bearing member 133 or resilient member 135 at a point between the hook element 110 and the upper edge element 120, the a simple, yet cost effective attachment of the upper edge element 120 to the hook element 110 is provided. Further, if the loops are formed by both ends of the load bearing member 133 and/or resilient member 135 being at the upper edge element 120, both ends may be attached to the upper edge element 120 making for a sturdy and strong connection. Preferably, both ends are connected by the same connection means 125. If both the load bearing member 133 the resilient member 135 are looped all the way from the upper edge element 120, through the hook element 110 and back to the upper edge element, it is beneficial to fasten both the load bearing member 133 and the resilient member 135 by means of the same connection means 125.

The embodiment of Fig. 4 illustrates additional features of the barrier net 100 according to the invention. The connecting portion 113 of the hook element 110 in Fig. 4 is formed as a closed loop. This increases the strength of the connecting portion 113 and the risk of it being deformed causing the connecting arrangement 130 to disengage the hook element 110 is significantly reduced. The use of e.g. eyelets with the closed loop connecting portion 113 is still possible although, as the skilled person will appreciate, it requires that the loop of the connection portion 113 is closed after the eyelet is connected to the connecting portion 113.

In Fig. 5, one embodiment is shown wherein the connecting arrangement 130 is fully accommodated inside the upper edge element 120. This is preferable, since the usable width of the barrier net 100 is typically defined by the net member 140 attached to the upper edge element 120. Any extra width added by e.g. the connecting arrangements 130 extending outside the upper edge element 120, may introduce a gap between the net member 140 and a side of the vehicle 10. In order to fully or partly accommodate the connecting arrangement 130 inside the upper edge element 120, the upper edge element 120 may be formed as a tube with open ends at the short edges. In one embodiment, this is accomplished by forming the upper edge element 120 from a belt material that is folded along its horizontal extension. The crease formed will create a dual layered upper edge element 120 with open short edges towards the upper fastening elements 20 of the vehicle 10. The folded side is preferable arranged towards a ceiling of the vehicle 10 and the open lower end is closed, preferably by seams. These seams may also be arranged to attach the net member 140 to the upper edge element 120, preferably such that the net member 140 is sandwiched by the folded belt material of the upper edge element 120. This will provide an upper edge element 120 with an inner horizontal channel with open end sections. Preferably, the connecting arrangement 130 is wholly arranged inside the horizontal channel of the upper edge element 120. The arrangement of the connection arrangement 130 is such that the hook element 110 extends into the horizontal channel of the upper edge element 120. The connection portion 113 of the hook element 110 will engage the connecting arrangement 130 inside the horizontal channel of the upper edge element 120. Depending on the location of the upper fastening elements 20 of the vehicle 10, the rod portion 117 of the hook element 110 may be provided with an arch 119 in order to angle the head portion of the hook element 110 correctly towards the upper fastening elements 20 of the vehicle 10. The connection means 125 is preferably arranged to attach both sides of the channel of the upper edge element 120 to the connection arrangement 130, creating a strong and secure attachment of the connection arrangement 130. However, in some embodiments, the connection means 125 may be arranged to only to attach the connection arrangement 130 to one side of the channel of the upper edge element 120. The latter may be beneficial when e.g. the connection arrangement 130 is attached to the belt material of the upper edge element 120 before the belt material is folded. It should be mentioned that, albeit the connection arrangement 130 is described as wholly arranged inside the horizontal channel of the upper edge element 120, embodiments with partial arrangement inside the horizontal channel are also part of the invention.

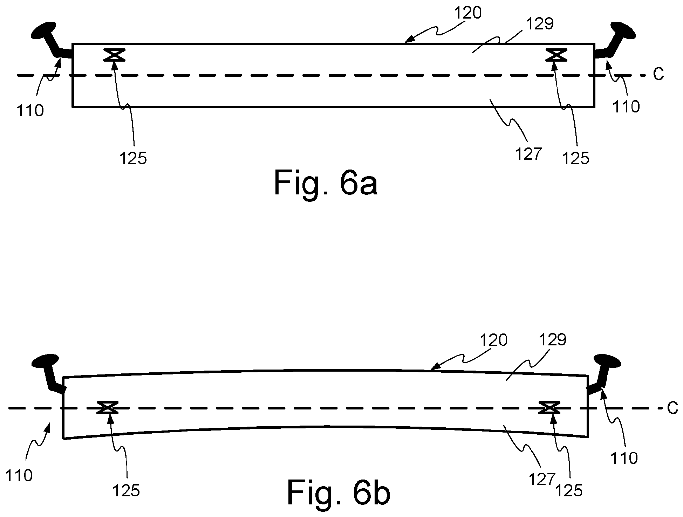

Thanks to the inventive concept of resilient portion 135 in the connection arrangement 130, the vertical location of the connection means 125, illustrated as an envelope seam in Figs 6a-c, on the upper edge element 120 can be utilized to form a curvature of the upper edge element 120. The choice of connection means 125 is not limited to envelope seams or seams in general, as long as the connection means 125 does not extend the full width of the upper edge element 120. In Fig. 6a, the connection means 125 are arranged in the upper section 129 of the upper edge element 120. As the hook elements 110 are fastened to the upper fastening elements 20 of the vehicle 10, the resilient portions 135 are biased, exerting a force, via the connection arrangements 130, each directed towards the opposing connection arrangement 130. As the connection arrangements in Fig. 6a are vertically arranged substantially centered on the upper edge element 120, the force exerted by the resilient portions 135 will also be vertically centered and both an upper edge and a lower edge of the upper edge element 120 will be substantially horizontal.

In Fig. 6b, the connection means 125 are arranged substantially vertically centered on the upper edge element 120. As each of the hook element 120 is fastened to the upper fastening elements 20 of the vehicle 10, they will be, compared to the embodiment of Fig. 6a, angled towards the opposite hook element. The hook elements will bear on the edges of upper edge element 120 and as the resilient portions 135 of the connection arrangements 130 are biased, a middle section of the lower edge of the upper edge element 120 will be pulled upwards towards the ceiling if the vehicle 10. This will in turn push the upper edge of the upper edge element 10 towards the ceiling of the vehicle, efficiently introducing an upwards curvature of the upper edge element 120. The same effect, or even more, of the curvature as illustrated in Fig. 6b is achieved if the connection means 125 are arranged in the lower section 127 of the upper edge element 120

The arrangement of the connection means 125 is preferably adapted such that the curvature of the upper edge element 120 matches a curvature of the inside of the ceiling of the vehicle 10. That is, the embodiment of Fig. 6a is suitable when the inner ceiling of the vehicle 10 is substantially flat and the embodiment of Fig. 6b is suitable when the inner ceiling of the vehicle 10 is arched upwards. In addition to being esthetically pleasing, having the upper edge element 120 following the curvature of the inner ceiling of the vehicle 10 reduces any gap between the upper edge element 120 and the inner ceiling of the vehicle 10 and thereby the risk that goods moving into the passenger compartment of the vehicle 10. It should be understood that the curvature of the upper edge element will be affected by the placement of the connection means in conjunction with the location of the upper fastening elements 20 of the vehicle 10 and how, e.g. at what angels, the hook elements 110 engage the connection arrangement 130 and the upper fastening elements 20.

The invention has, to this point, been describes as incorporating resilient portions 135 at both upper sides of the upper edge element 120. This is but one example, and all embodiments disclosed and their hybrids are possible to realize with having a resilient portion 135 at only one of the upper sides of the upper edge element 120. Having the hook element 110 at one side of the upper edge element 120 attached to the upper edge element 120 by means of not having a resilient portion 135 may be beneficial since the cost of the barrier net 100 may be reduced by the removal of one resilient portion 135.

Further to this, examples are given with connection arrangements having one resilient portion 135 or connection arrangements 130 having one resilient portion 135 and one load bearing portion 133. It should be appreciated that more than one of each of the portions 133, 135 may very well be comprised in each connection arrangement 130. It may be desirable to combine any number of portions 133, 135 of less strength to arrive at a desired total strength of the portion 133, 135 which may be beneficial in order to source cheaper material or reduce e.g. a width of each portion 133, 135.

## Claims

1. A barrier net (100) for separating a cargo area of a vehicle (10) from a passenger compartment of the vehicle (10) by being fastened to upper fastening elements (20) of the vehicle (10), the barrier net (100) comprising:
hook elements (110) arranged at each upper corner of the barrier net (100) for fastening the barrier net (100) to the upper fastening elements (20) of the vehicle (10), wherein at least one of the hook elements (110) is connected to an upper edge element (120) of the barrier net (100) by means a connecting arrangement (130) comprising a load bearing portion (133) and a resilient portion (135) wherein the load bearing portion (133) of the connecting arrangement (130) and the resilient portion (135) of the connecting arrangement (130) are looped about a connection portion (113) of the hook element (110) and the resilient portion (135) is shorter than the load bearing portion (133) thereby limiting the resilience of the resilient portion (135),
**characterised in that** both the load bearing portion (133) and the resilient portion (135) are extending from the upper edge element (120), to the connection portion (113) and back to the upper edge element (120).

2. The barrier net (100) of any one of the preceding claims, wherein the connection portion (113) of the hook element (110) is a closed loop.

3. The barrier net (100) of any one of the preceding claims, wherein the connecting arrangement (130) is fully accommodated inside the upper edge element (120) of the barrier net (100).

4. The barrier net (100) of any one of the preceding claims, wherein the resilient portion (135) is attached to the upper edge element (120) by a connection means (125).

5. The barrier net (100) of any one of the preceding claims, wherein the resilient portion (135) and the load bearing portion (133) of the connecting arrangement (130) are attached to the upper edge element (120) by the same connection means (125).

6. The barrier net (100) of any one of claims 4 or 5, wherein the connection means (125) is attaching the connecting arrangement (130) at an upper section (129) of the upper edge element (130).

7. The barrier net (100) of any one of claims 4 or 5, wherein the connection means (125) is attaching the connecting arrangement (130) at a middle or lower section (127) of the upper edge element (120).

8. The barrier net (100) of any one of the preceding claims, wherein the resilient portion (135) and the load bearing portion (133) of the connecting arrangement (130) are attached to the upper edge element (120) by means of one or more connection arrangements (125) in the form of seams (125).

9. The barrier net (100) of claim 8, wherein at least one of said one or more seams (125) is an envelope seam.

10. The barrier net (100) of any one of the preceding claims, wherein the load bearing portion (133) of the connecting arrangement (130) is of a belt material.

11. The barrier net (100) of any one of the preceding claims, comprising two hook elements (110) wherein each of the hook elements (110) is connected to the upper edge element (120) by means of connecting arrangements (130).

12. The barrier net (100) of any one of claims 1 to 10, comprising two hook element (110) wherein one of the hook elements (100) is connected to the upper edge element (120) by means of the connecting arrangement (130) and the other of the hook elements (120) is connected to the upper edge element (120) by a separate means not comprising a resilient portion (135).

13. The barrier net (100) of any one of the preceding claims, wherein the upper edge element (120) is formed from a flexible belt material.

## Patentansprüche

1. Ein Barrierenetz (100) zum Trennen eines Beladungsbereichs eines Fahrzeugs (10) von einem Fahrgastraum des Fahrzeugs (10), indem es an oberen Befestigungselementen (20) des Fahrzeugs (10) befestigt wird, wobei das Barrierenetz (100) Folgendes aufweist:
Hakenelemente (110), die an jeder oberen Ecke des Barrierenetzes (100) angeordnet sind, um das Barrierenetz (100) an den oberen Befestigungselementen (20) des Fahrzeugs (10) zu befestigen, wobei mindestens eines der Hakenelemente (110) mit einem oberen Randelement (120) des Barrierenetzes (100) mittels einer Verbindungsanordnung (130) verbunden ist, die einen lasttragenden Abschnitt (133) und einen elastischen Abschnitt (135) aufweist, wobei der lasttragende Abschnitt (133) der Verbindungsanordnung (130) und der elastische Abschnitt (135) der Verbindungsanordnung (130) um einen Verbindungsabschnitt (113) des Hakenelements (110) geschlungen sind und wobei der elastische Abschnitt (135) kürzer als der lasttragende Abschnitt (133) ist, wodurch die Elastizität des elastischen Abschnitts (135) begrenzt wird,
**dadurch gekennzeichnet, dass**
sich sowohl der lasttragende Abschnitt (133) als auch der elastische Abschnitt (135) von dem oberen Randelement (120) zu dem Verbindungsabschnitt (113) und zurück zu dem oberen Randelement (120) erstrecken.

2. Das Barrierenetz (100) nach einem der vorhergehenden Ansprüche, wobei der Verbindungsabschnitt (113) des Hakenelements (110) eine geschlossene Schlaufe ist.

3. Das Barrierenetz (100) nach einem der vorhergehenden Ansprüche, wobei die Verbindungsanordnung (130) vollständig im Inneren des oberen Randelements (120) des Barrierenetzes (100) untergebracht ist.

4. Das Barrierenetz (100) nach einem der vorhergehenden Ansprüche,
wobei der elastische Abschnitt (135) durch ein Verbindungsmittel (125) an dem oberen Randelement (120) befestigt ist.

5. Das Barrierenetz (100) nach einem der vorhergehenden Ansprüche,
wobei der elastische Abschnitt (135) und der lasttragende Abschnitt (133) der Verbindungsanordnung (130) durch dasselbe Verbindungsmittel (125) an dem oberen Randelement (120) angebracht sind.

6. Das Barrierenetz (100) nach einem der Ansprüche 4 oder 5, wobei das Verbindungsmittel (125) die Verbindungsanordnung (130) an einem oberen Abschnitt (129) des oberen Randelements (130) befestigt.

7. Das Barrierenetz (100) nach einem der Ansprüche 4 oder 5, wobei das Verbindungsmittel (125) die Verbindungsanordnung (130) an einem mittleren oder unteren Abschnitt (127) des oberen Randelements (120) befestigt.

8. Das Barrierenetz (100) nach einem der vorhergehenden Ansprüche,
wobei der elastische Abschnitt (135) und der lasttragende Abschnitt (133) der Verbindungsanordnung (130) an dem oberen Randelement (120) mittels einer oder mehrerer Verbindungsanordnungen (125) in Form von Nähten (125) befestigt sind.

9. Das Barrierenetz (100) nach Anspruch 8, wobei mindestens eine der einen oder mehreren Nähte (125) eine Hüllennaht ist.

10. Das Barrierenetz (100) nach einem der vorhergehenden Ansprüche,
wobei der lasttragende Abschnitt (133) der Verbindungsanordnung (130) aus einem Gurtmaterial besteht.

11. Das Barrierenetz (100) nach einem der vorhergehenden Ansprüche, das zwei Hakenelemente (110) aufweist, wobei jedes der Hakenelemente (110) mit dem oberen Randelement (120) durch Verbindungsanordnungen (130) verbunden ist.

12. Das Barrierenetz (100) nach einem der Ansprüche 1 bis 10, das zwei Hakenelemente (110) aufweist, wobei eines der Hakenelemente (100) mittels der Verbindungsanordnung (130) mit dem oberen Randelement (120) verbunden ist und wobei das andere Element (120) mit dem oberen Randelement (120) durch ein separates Mittel verbunden ist, das keinen elastischen Abschnitt (135) aufweist.

13. Das Barrierenetz (100) nach einem der vorhergehenden Ansprüche,
wobei das obere Randelement (120) aus einem flexiblen Gurtmaterial gebildet ist.

## Revendications

1. Filet formant barrière (100) pour séparer une zone de cargaison d'un véhicule (10) d'un habitacle du véhicule (10) en étant fixé à des éléments de fixation supérieurs (20) du véhicule (10), le filet formant barrière (100) comprenant :
des éléments de crochet (110) agencés au niveau de chaque coin supérieur du filet formant barrière (100) pour fixer le filet formant barrière (100) aux éléments de fixation supérieurs (20) du véhicule (10), dans lequel au moins un des éléments de crochet (110) est relié à un élément de bord supérieur (120) du filet formant barrière (100) au moyen d'un agencement de liaison (130) comprenant une partie de support de charge (133) et une partie élastique (135), dans lequel la partie de support de charge (133) de l'agencement de liaison (130) et la partie élastique (135) de l'agencement de liaison (130) sont enroulées autour d'une partie de liaison (113) de l'élément de crochet (110) et la partie élastique (135) est plus courte que la partie de support de charge (133), en limitant ainsi l'élasticité de la partie élastique (135),
**caractérisé en ce que**
la partie de support de charge (133) et la partie élastique (135) s'étendent à partir de l'élément de bord supérieur (120), vers la partie de liaison (113) et en arrière vers l'élément de bord supérieur (120).

2. Filet formant barrière (100) selon l'une quelconque des revendications précédentes, dans lequel la partie de liaison (113) de l'élément de crochet (110) est une boucle fermée.

3. Filet formant barrière (100) selon l'une quelconque des revendications précédentes, dans lequel l'agencement de liaison (130) est entièrement logé à l'intérieur de l'élément de bord supérieur (120) du filet formant barrière (100).

4. Filet formant barrière (100) selon l'une quelconque des revendications précédentes, dans lequel la partie élastique (135) est fixée à l'élément de bord supérieur (120) par des moyens de liaison (125).

5. Filet formant barrière (100) selon l'une quelconque des revendications précédentes, dans lequel la partie élastique (135) et la partie de support de charge (133) de l'agencement de liaison (130) sont fixées à l'élément de bord supérieur (120) par les mêmes moyens de liaison (125).

6. Filet formant barrière (100) selon l'une quelconque des revendications 4 ou 5, dans lequel les moyens de liaison (125) fixent l'agencement de liaison (130) au niveau d'une section supérieure (129) de l'élément de bord supérieur (130).

7. Filet formant barrière (100) selon l'une quelconque des revendications 4 ou 5, dans lequel les moyens de liaison (125) fixent l'agencement de liaison (130) au niveau d'une section médiane ou inférieure (127) de l'élément de bord supérieur (120).

8. Filet formant barrière (100) selon l'une quelconque des revendications précédentes, dans lequel la partie élastique (135) et la partie de support de charge (133) de l'agencement de liaison (130) sont fixées à l'élément de bord supérieur (120) au moyen d'un ou plusieurs agencements de liaison (125) sous la forme de coutures (125).

9. Filet formant barrière (100) selon la revendication 8, dans lequel au moins une desdites une ou plusieurs coutures (125) est une couture d'enveloppe.

10. Filet formant barrière (100) selon l'une quelconque des revendications précédentes, dans lequel la partie de support de charge (133) de l'agencement de liaison (130) est en matériau de courroie.

11. Filet formant barrière (100) selon l'une quelconque des revendications précédentes, comprenant deux éléments de crochet (110) dans lequel chacun des éléments de crochet (110) est relié à l'élément de bord supérieur (120) au moyen d'agencements de liaison (130).

12. Filet formant barrière (100) selon l'une quelconque des revendications 1 à 10, comprenant deux éléments de crochet (110) dans lequel l'un des éléments de crochet (100) est relié à l'élément de bord supérieur (120) au moyen de l'agencement de liaison (130) et l'autre des éléments de crochet (120) est relié à l'élément de bord supérieur (120) par des moyens séparés ne comprenant pas de partie élastique (135).

13. Filet formant barrière (100) selon l'une quelconque des revendications précédentes, dans lequel l'élément de bord supérieur (120) est formé à partir d'un matériau de courroie flexible.
